Europäisches Patentamt

European Patent Office

Office européen des brevets

(11) Veröffentlichungsnummer: **0 331 255**

**A2**

# (12) EUROPÄISCHE PATENTANMELDUNG

(21) Anmeldenummer: **89200474.8**

(22) Anmeldetag: **27.02.89**

(51) Int. Cl.⁴: **H04B 9/00**

(30) Priorität: **03.03.88 DE 3806864**

(43) Veröffentlichungstag der Anmeldung:
**06.09.89 Patentblatt 89/36**

(84) Benannte Vertragsstaaten:
**DE FR GB**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB**

(72) Erfinder: **Bathe, Paul, Dipl.-Ing. (FH)**
**Eckenhaiderhauptstrasse 62**
**D-8501 Eckental(DE)**

(74) Vertreter: **Peuckert, Hermann, Dipl.-Ing. et al**
**Philips Patentverwaltung GmbH**
**Wendenstrasse 35 Postfach 10 51 49**
**D-2000 Hamburg 1(DE)**

(54) **Optisches Uebertragungssystem.**

(57) In Abhängigkeit von der Länge des Lichtwellenleiters und anderen Faktoren tritt ein von einem Lasersender in den Lichtwellenleiter eingekoppeltes Signal auf der anderen Seite des Lichtwellenleiters gedämpft aus. Eine zufriedenstellende Auswertung des empfangenen Signals ist nur möglich, wenn die Empfangsleistung weder zu klein noch zu groß ist. Mittels der vorgestellten Schaltungsanordnung werden sowohl Sender als auch Empfänger stets in einem optimalen Bereich betrieben, wobei manuelle Einstellarbeiten unter Umständen sogar ganz entfallen können.

Hierzu ist empfangsseitig ein optischer Leistungsmesser und eine Auswerteeinrichtung angeordnet und Ausgangssignale dieser Auswerteeinrichtung sind über einen Rückkanal dem Lasersender zugeführt.

FIG.1

## Optisches Übertragungssystem

Die Erfindung betrifft ein optisches Übertragungssystem mit einem Lasersender, welcher an einem Lichtwellenleiter ein optisches Signal mit definierter Ausgangsleistung abgibt, und einem am anderen Ende des Lichtwellenleiters angekoppelten optischen Empfänger.

Es ist bekannt, die optische Ausgangsleistung einer Laserdiode mittels eines Sollwertgebers vorzugeben. Wegen dem durch Alterung und Temperaturabhängigkeit der Laserkennlinie bedingten, nichtlinearen Zusammenhang zwischen dem vom Sollwertgeber vorgegebenen Sollwert und der tatsächlichen Ausgangsleistung wird in der älteren deutschen Patentanmeldung 37 06 572.6 vorgeschlagen, die von der Laserdiode abgestrahlte optische Leistung mittels einer Schaltungsanordnung zur optischen Leistungsmessung zu messen und mittels einer Logikschaltung zu regeln. Der optische Leistungsmesser besteht aus einer unmittelbar bei der Laserdiode angeordneten Monitorfotodiode und einem an der Monitorfotodiode angeschlossenen Meßverstärker. Die Ausgangsspannung des Meßverstärkers ist proportional zur abgestrahlten optischen Leistung der Laserdiode. Der Ausgang des Meßverstärkers und der Ausgang des Sollwertgebers, welcher eine Referenzspannung erzeugt, sind der Logikschaltung zugeführt, welche den Pulsstrom der Laserdiode so regelt, daß die abgestrahlte optische Leistung der mit dem Sollwertgeber vorgegebenen Leistung entspricht.

Die von einem solchen Lasersender abgestrahlte optische Leistung, im folgenden als Sendeleistung bezeichnet, wird in dem als Übertragungsmedium verwendeten Lichtwellenleiter gedämpft. In Abhängigkeit von der Länge des Lichtwellenleiters und anderen Faktoren tritt das Signal als Empfangssignal auf der anderen Seite des Lichtwellenleiters, an welcher ein Empfänger angeschlossen ist, mit einer niedrigeren optischen Leistung, im folgenden als Empfangsleistung bezeichnet, aus. Eine zufriedenstellende Auswertung des Empfangssignals ist nur dann möglich, wenn die Empfangsleistung in einem bestimmten Leistungsbereich liegt. Ist die Empfangsleistung zu klein, so geht das Empfangssignal im Eingangsrauschen des Empfängers unter, ist die Empfangsleistung zu groß, besteht die Gefahr, daß der Empfänger übersteuert wird. Darüber hinaus wird die Lebensdauer der Laserdiode durch eine unnötig hohe Sendeleistung verkürzt. Aus diesem Grund wird, beispielsweise vor Inbetriebnahme einer Lichtwellenleiterstrecke, die zu erwartende Dämpfung ermittelt und danach die optische Sendeleistung des Lasersenders bestimmt. Diese wird mittels des Sollwertgebers vorgegeben.

Die ermittelten Werte stimmen in der Regel nicht exakt mit den tatsächlichen Dämpfungswerten überein. Zum Beispiel ergeben sich höhere Dämpfungen durch schlechte Spleißstellen. Außerdem sind Änderungen in Folge der Alterung von Bauelementen möglich. Um auf jeden Fall einer Verschlechterung gegenüber den ermittelten Werten begegnen zu können, wird die Sendeleistung meist etwas größer gewählt, um eine ausreichende Leistungsreserve zu erzielen. Die überschüssige Leistung wird dann empfangsseitig, zum Beispiel mit optischen Dämpfungsgliedern, eliminiert. Alle diese Maßnahmen erfordern jedoch sowohl auf der Sendeseite als auch auf der Empfangsseite einen zusätzlichen manuellen Abgleichaufwand, welcher evtl. von Zeit zu Zeit zu wiederholen ist.

Aufgabe der vorliegenden Erfindung ist es, einen Lasersender der eingangs genannten Art so auszubilden, daß möglichst wenig manuelle Eingriffe notwendig sind, um sowohl Sender als auch Empfänger stets in einem optimalen Bereich zu betreiben.

Diese Aufgabe wird dadurch gelöst, daß empfangsseitig ein optischer Leistungsmesser und eine Auswerteeinrichtung angeordnet und Ausgangssignale dieser Auswerteeinrichtung über einen Rückkanal dem Lasersender zugeführt sind.

Vorteilhafte Ausgestaltungen der Erfindung sind in den Unteransprüchen angegeben.

Die Erfindung wird anhand eines in der Zeichnung dargestellten Ausführungsbeispieles näher beschrieben und erläutert.

Es zeigen:

Figur 1 ein Ausführungsbeispiel der Erfindung,

Figur 2 ein anderes Ausführungsbeispiel einer Auswerteeinrichtung.

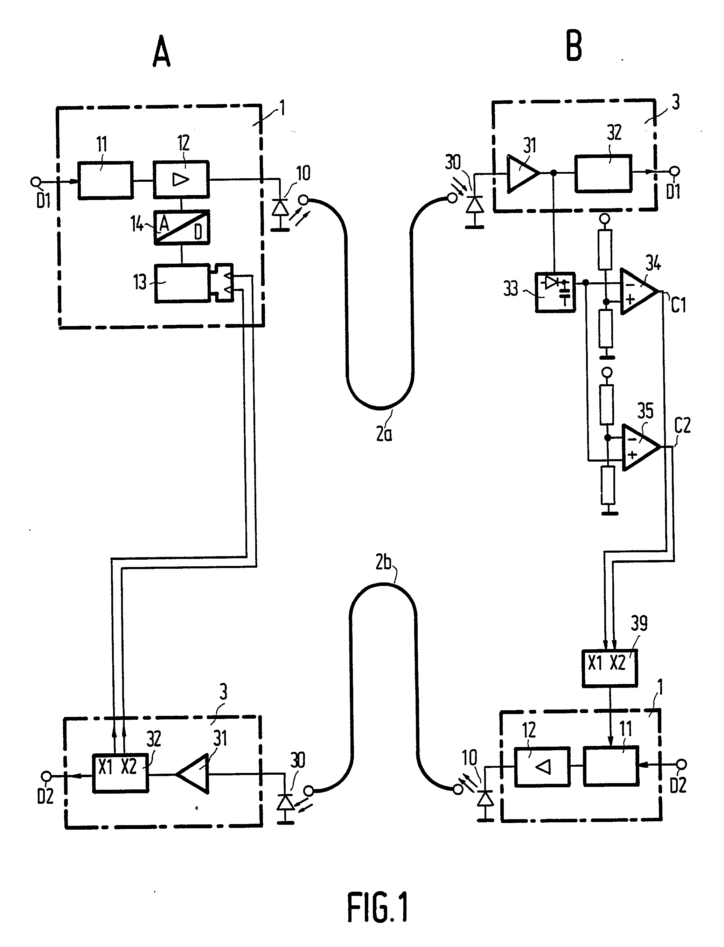

Figur 1 zeigt eine vorteilhafte Ausführungsform der Erfindung mit zwei Übertragungseinrichtungen zur Übertragung von ersten Daten von einem ersten Ort A zu einem zweiten Ort B, und zur Übertragung von zweiten Daten von dem zweiten Ort B zu dem ersten Ort A. Beide Datenübertragungseinrichtungen sind gleich aufgebaut, weshalb für die gleichen Bauelemente auch gleiche Bezugzeichen verwendet werden. Entsprechend der Übertragungsrichtung vom ersten Ort A zum zweiten Ort B sind alle am ersten Ort A befindlichen Einrichtungen im folgenden als sendeseitig, alle am zweiten Ort B befindlichen Einrichtungen als empfangsseitig, bezeichnet. Der Übersichtlichkeit wegen ist jedoch nur die Regelung der sendeseitigen Laserdiode und die hierzu notwendigen sendeseitigen Einrichtungen auf der Seite A und die hierzu notwendigen empfangsseitigen Einrichtungen auf der Seite B gezeigt.

Jede Datenübertragungseinrichtung besteht aus einem Lasersender 1 mit einer Laserdiode 10. Die Laserdiode 10 ist an eine Glasfaser 2 angekoppelt, an deren anderem Ende eine Fotodiode 30 angekoppelt ist. Die Fotodiode 30 ist an einen Empfänger 3 angeschlossen.

Zur Übertragung der Datensignale werden diese durch einen im jeweiligen Sender 1 enthaltenen Coder 11 in einen geeigneten Übertragungscode konvertiert. Der Übertragungscode ist jeweils einer Sendeendstufe 12 zugeführt. Entsprechend einer von einem Stellglied 13, 14 vorgegebenen Steuerspannung erzeugt die Sendeendstufe 12 einen Modulationsstrom für die jeweilige, an der Sendeendstufe angeschlossene, Laserdiode 10. Der Fotostrom, der am anderen Ende des jeweiligen Lichtwellenleiters 2 angekoppelten Fotodiode 30, wird in einem Eingangsverstärker 31 verstärkt. Mit dem Ausgang des Eingangsverstärkers 31 ist jeweils ein Decoder 32 und ein Spitzenwertdetektor 33 verbunden. Die Decoder 32 gewinnen aus den empfangenen codierten Signalen das ursprüngliche Datensignal zurück. Der Spitzenwertdetektor 32 erzeugt eine zur empfangenen optischen Eingangsleistung proportionale Spannung. Am Ausgang des Spitzenwertdetektors 32 sind zwei analoge Komparatoren 34 und 35 angeschlossen. Mit Hilfe von einstellbaren Widerständen ist beiden Komparatoren eine jeweils unterschiedliche Vergleichsspannung vorgegeben. Der erste Komparator 34 gibt ein Ausgangssignal C1 ab, wenn die Spannung des Spitzenwertdetektors 33 kleiner ist als die an diesem Komparator 34 vorgegebene Vergleichsspannung, der zweite Komparator 35 gibt ein Ausgangssignal C2 ab, wenn die Spannung des Spitzenwertdetektors 33 größer ist als die an diesem Komparator 35 vorgegebene Spannung.

Die Ausgangssignale der Komparatoren sind einer Steuersignaleinrichtung 39 zugeführt. Die Komparatoren 34, 35 und die Steuersignaleinrichtung 39 bilden zusammen eine Auswerteeinrichtung. Die Steuersignaleinrichtung 39 bildet ein Befehlswort, welches sich aus den zwei Ausgangssignalen C1, C2 der Komparatoren zusammensetzt. Das erste Bit X1 des Befehlswortes hat den binären Wert Eins, wenn der erste Komparator 34 ein Signal abgibt, das zweite Bit X2 des Befehlswortes hat den binären Wert Eins, wenn der zweite Komparator 35 ein Signal abgibt. Dieses Befehlswort wird in dem empfangsseitig angeordneten Coder 11 durch Codefehlereinblendung in das von der Empfangsseite B zur Senderseite A zu übertragende Datensignal D2 eingebracht. Zusammen mit dem Datensignal D2 wird es in codierter Form durch die empfangsseitige Laserdiode 10 und die zweite Glasfaser 2b zu dem sendeseitigen Empfänger 3 übertragen. Der im sendeseitigen Empfänger 3 angeordnete Decoder gewinnt das als Codefehler eingeblendete Befehlswort zurück. Bei aktivem Pegel des ersten Bits X1 des Befehlswortes erzeugt der Decoder 32 einen Impuls, welcher an einen ersten Eingang des Stellgliedes 13, bei einem aktiven Pegel des zweiten Bits X2 des Befehlswortes erzeugt der Decoder 32 einen Impuls, welcher an den zweiten Eingang des Stellgliedes geführt ist. Das Stellglied besteht aus einem Vorwärts-Rückwärts-Zähler 13 und einem Digital-Analog-Wandler 14. Der Zähler ist so aufgebaut, daß er bei einem Impuls an seinem ersten Zähleingang CUP seinen Zählinhalt um einen Wert erhöht, bei einem Impuls an seinem zweiten Zähleingang CDN jedoch seinen Zählzustand um einen Wert erniedrigt. Ein solcher Zähler ist zum Beispiel unter der Bezeichnung 74LS193 erhältlich. Der Ausgang des Digital-Analog-Wandlers ist dem Steuereingang des sendeseitigen Senders zugeführt. Entsprechend der am Steuereingang des Senders anliegenden Spannung wird der Pulsstrom der Laserdiode und somit die optische Ausgangsleistung des Lasersenders in bekannter Weise gesteuert.

Zu Beginn einer Datenübertragung ist der Zählerstand des Zählers 13 auf Null gesetzt. Hierdurch wird kein optisches Signal über die erste Glasfaser 2a gesendet, so daß der Spitzenwert der Empfangsleistung ebenfalls Null ist. Hierdurch gibt der erste Komparator 34 ein logisches Signal ab, während der zweite Komparator 35 kein Signal abgibt. Das aus diesen beiden Signalen gebildete Befehlswort X1, X2 wird über die als Rückkanal gewählte zweite Glasfaser 2b zum sendeseitigen Empfänger 3 übertragen. Da das erste Bit X1 des zurückgewonnenen Befehlswortes den binären Wert Eins aufweist, wird ein Impuls erzeugt, welcher an den Eingang des Zählers 13 geleitet wird. Dieser Impuls erhöht den Zählerstand des Zählers um einen Wert. Hierdurch wird die Sendeleistung des sendeseitigen Senders 1 erhöht. Dieser Vorgang wiederholt sich solange, bis der Spitzenwert der Empfangsleistung so groß ist, daß hierdurch die Ausgangsspannung des Spitzenwertdetektors 33 die Schaltschwelle des ersten Komparators 34 überschreitet. Die Schaltwelle des ersten Komparators 34 ist so gewählt, daß die Empfangsleistung, die sich bei dieser Schaltschwelle einstellt, einen unverrauschten Empfang der Daten gewährleistet. Verringert sich in Folge von Temperatureffekten oder Alterung die abgestrahlte optische Leistung der Laserdiode oder erhöht sich die Dämpfung der Übertragungsstrecke, so sinkt die Empfangsleistung. Sobald die Empfangsleistung unter die Schaltschwelle des ersten Komparators 34 gesunken ist, wird auf schon beschriebene Weise die Sendeleistung wieder erhöht.

Auf diese Weise ist gewährleistet, daß immer eine ausreichende Eingangsleistung auf die Fotodiode 30 auftrifft.

Die Schaltschwelle des zweiten Komparators 35 liegt über der Schaltschwelle des ersten Komparators 34. Überschreitet bei steigender Eingangsleistung die Ausgangsspannung des Spitzenwertdetektors 33 den am zweiten Komparator 35 eingestellten Schwellwert, so wird das zweite Bit X2 des Befehlswortes gesetzt. Das über den Rückkanal geführte Befehlswort erzeugt einen Impuls am zweiten Eingang des Zählers 13, wodurch dessen Zählerstand um einen Wert erniedrigt wird. Dieser Vorgang wiederholt sich solange, bis die Empfangsleistung wieder unterhalb des mit dem zweiten Komparators 35 eingestellten Maximalwertes ist. Die Schaltschwelle des zweiten Komparators wird vorteilhafterweise daher so eingestellt, daß bei der der Schaltschwelle entsprechenden Empfangsleistung eine Übersteuerung des Eingangsverstärkers 31 sicher vermieden wird.

Die geschilderte Schaltungsanordnung arbeitet nach dem Prinzip eines Zwei-Punkt-Reglers. Die Regelgröße ist die Empfangsleistung des Empfängers 3, die Stellgröße die Sendeleistung des Lasersenders 1. Wird die Sendeleistung anhand der am Stellglied 13, 14 eingestellten Stellgröße in einem zweiten, im Lasersender angeordneten Regelkreis geregelt (wie dies zum Beispiel aus der eingangs erwähnten Patentschrift bekannt ist), so ist die Zeitkonstante des beschriebenen Regelkreises zur Regelung der Empfangsleistung, zum Beispiel durch verzögerte Aussendung des Befehlswortes, entsprechend groß gegenüber der Zeitkonstante des im Lasersender angeordneten Regelkreises zu wählen.

Durch die beschriebene Schaltungsanordnung wird ein selbsttätiger Streckenabgleich eines optischen Übertragungssystems erreicht. Hierdurch ist es zum Beispiel bei Ausbau oder Reperaturen eines Lichtwellenleiternetzes möglich, den Lichtwellenleiter zu verlängern bzw. zu verkürzen und das Übertragungssystem wieder in Betrieb zu nehmen, ohne einen manuellen Abgleich vornehmen zu müssen. Als Rückkanal ist man jedoch nicht auf einen zweiten Lichtwellenleiter beschränkt, eine Rückübertragung ist auch über beliebige Signalwege, beispielsweise eine elektrische Zweidrahtleitung, möglich. Übertragungssysteme sind jedoch meist bidirektional aufgebaut, wodurch es bei der im Ausführungsbeispiel geschilderten Schaltungsanordnung besonders vorteilhaft ist, die relativ niederbitratigen Regelbefehle durch Codefehlereinblendung in einer bereits für die Rückrichtung vorhandenen zweiten Übertragungseinrichtung zu übertragen. Hierzu ist man nicht notwendigerweise auf zwei Lichtwellenleiter angewiesen, da es bei sogenannten bidirektionalen Wellenmultiplexverfahren möglich ist, einen Lichtwellenleiter bidirektional auszunutzen, indem in der Richtung mit einer anderen Frequenz als in der Rückrichtung übertragen wird.

In einer nicht dargestellten Ausführungsform kann der Zählerstand des Zählers 13 mit Hilfe von Einstellgliedern, z.B. Schaltern, eingestellt werden. Als Voreinstellung wählt man den Wert, welchen man als optimale Leistung nach einem Streckendämpfungsplan ermittelt hat. Jedesmal, wenn der Sender 1 in Betrieb genommen wird, wird die Voreinstellung durch einen Übernahmeimpuls als Zählwert übernommen. Dies hat den Vorteil, daß die selbsttätige Einpegelung der Übertragungsstrecke nicht mit dem Wert Null beginnt, sondern mit einem Wert, welcher meist sehr nahe bei dem Wert liegt, auf den sich die geschilderte Schaltungsanordnung schließlich einregelt. Hier durch ist eine sehr schnelle Einschaltzeit des Senders 1 gewährleistet.

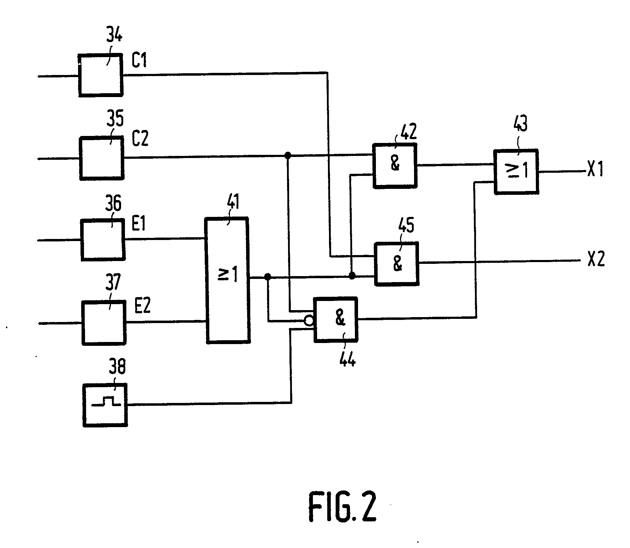

Figur 2 zeigt eine besonders vorteilhafte Ausgestaltung der Auswerteeinrichtung. Diese Auswerteeinrichtung besteht aus den beiden Komparatoren 34 und 35 sowie einer Bitfehlerüberwachungseinrichtung 36 und einem Taktausfallsignalgeber 37. Die Komparatoren 34 und 35 arbeiten auf gleiche Weise wie in dem ersten Ausführungsbeispiel. Die Bitfehlerüberwachungseinrichtung 36 erzeugt ein Ausgangssignal E1, wenn die Anzahl der im Eingangssignal erkannten Bitfehler pro Zeiteinheit einen bestimmten einstellbaren Grenzwert überschreiten. Der Taktausfallsignalgeber 37 erzeugt ein Ausgangssignal E2, wenn eine im Decoder angeordnete Taktrückgewinnungsstufe keinen Eingangstakt zurückgewinnen kann. Die Ausgänge des Bitfehlerzählers 36 und des Taktausfallsignalgebers 37 sind den Eingängen eines ersten ODER-Gatters 41 zugeführt. Der Ausgang des ODER-Gatters ist einem ersten UND-Gatter 42 zugeführt, dessen zweiter Eingang mit dem Ausgang des zweiten Komparators 35 verbunden ist. Der Ausgang des ersten UND-Gatters 42 ist an den ersten Eingang eines zweiten ODER-Gatters 43 geführt. Der an diesem Ausgang des zweiten ODER-Gatters 43 anstehende Wert entspricht dem ersten Bit des Befehlswortes. Der Ausgang des ersten ODER-Gatters 41 ist einem invertierenden ersten Eingang eines zweiten UND-Gatters 44 zugeführt. Einem zweiten Eingang dieses UND-Gatters 44 ist der Ausgang des zweiten Komparators 35 und dem dritten Eingang dieses UND-Gatters 44 sind die Impulse eines Impulsgebers 38 zugeführt. Der Ausgang des zweiten UND-Gatters 44 ist mit dem zweiten Eingang des zweiten ODER-Gatters 43 verbunden. Der Ausgang des ersten Komparators 34 ist einem ersten Eingang eines dritten UND-Gatters 45 zugeführt, wobei der zweite Eingang dieses UND-Gatters mit dem Ausgang des er sten ODER-Gatters 41 verbunden ist. Der jeweilige binäre Wert am Ausgang des dritten UND-Gatters 45 entspricht dem zweiten Bit X2 des Befehlswortes.

Mit dieser Schaltungsanordnung für die Ansteuerschaltung ist eine wesentlich effektivere Regelung des Lasersenders möglich. In erster Linie muß ein optisches Übertragungssystem, um seinem Zweck gerecht zu werden, eine möglichst fehlerfreie Übertragung der zu übertragenden Daten gewährleisten. Die Fehlerfreiheit der Übertragung kann hierbei durch eine Kontrolle des zurückgewonnenen Datentaktes oder durch eine Bitfehlerüberwachung durchgeführt werden. Im Ausführungsbeispiel werden diese beiden Signale in dem ersten ODER-Gatter 41 zusammengefaßt, da schon bei einem einzigen Fehler die Gesamtfunktion des Übertragungssystems zumindest gestört ist. Übertragungsfehler bzw. Signalausfall können jedoch sowohl dadurch auftreten, daß die Eingangsleistung zu gering ist als auch daß sie zu groß ist und den Eingangsverstärker übersteuert. Daher ist der Ausgang des ODER-Gatters 41 noch mit den Ausgängen der Komparatoren 34 und 35 verknüpft. Hierdurch wird bei Übertragungsfehlern und Taktsignalausfällen bei Eingangsleistungen, welche niedriger sind als die Schaltschwelle des ersten Komparators 34, das erste Befehlsbit X1 gesetzt, wodurch die Ausgangsleistung des Lasers erhöht wird. Überschreitet hingegen der Spitzenwert der Empfangsleistung den an dem zweiten Komparator 35 eingestellten Schwellwert, so wird die Sendeleistung des Lasersenders durch Setzen des zweiten Befehlsbits X2 vermindert. Auf diese Weise ist die Sendeleistung des Lasersenders direkt der Empfangsqualität des Empfangssignals angepaßt. Während im ersten Ausführungsbeispiel die Schaltschwellen so gewählt werden mußten, daß sie einen genügenden Sicherheitsspielraum gegenüber Bauteiletoleranzen des Senders und des Empfängers gewährleisteten, so wird durch die Ansteuerschaltung des zweiten Ausführungsbeispiels eine Erhöhung der Laserleistung nur soweit vorgenommen, bis eine zuverlässige Datenübertragung möglich ist.

Im ersten Ausführungsbeispiel wurde die Leistung der Laserdiode nur dann verringert, wenn der Spitzenwert der Empfangsleistung den am zweiten Komparator eingestellten Schwellwert überschritten hatte. Der zeitgesteuerte Impulsgeber 38 ermöglicht jedoch eine ständige Anpassung der Sendeleistung an sich ändernde Bedingungen. Eine in größeren Zeitabständen vom Impulsgeber 38 abgegebene Impulsfolge, zum Beispiel jede Stunde eine Impulsfolge, setzt, wenn sowohl Bitfehlerüberwachung als auch Taktausfall keinen Fehler in der Übertragungsstrecke ergeben, mit jedem Impuls der Impulsfolge das erste Bit X1 des Befehlswortes. Hierdurch wird die Sendeleistung des Lasers verringert. Sobald dann vereinzelt Bitfehler auftreten, welche in der Regel noch eine vollständige Rückgewinnung des Datensignals ermöglichen, ist der Ausgang des zweiten UND-Gatters 44 gesperrt. Wegen des Bitfehlersignales C2 wird die Ausgangsleistung durch Setzen des zweiten Bits X2 des Befehlswortes wieder erhöht, bis keine Fehler mehr auftreten. Mittels dieser Rückstelleinrichtung wird die Sendeleistung immer gerade so gewählt, daß eine fehlerfreie Übertragung möglich ist. Dies hat den Vorteil, daß die Laserdiode mit der geringstmöglichsten Leistung betrieben wird und so die Lebensdauer der Laserdiode nicht unnötig verkürzt wird.

## Ansprüche

1. Optisches Übertragungssystem mit einem Lasersender, welcher an einen Lichtwellenleiter ein optisches Signal abgibt, und einem am anderen Ende des Lichtwellenleiters angekoppelten optischen Empfänger,
dadurch gekennzeichnet,
daß empfangsseitig ein optischer Leistungsmesser (33) und eine Auswerteeinrichtung (34, 35, 39) angeordnet und Ausgangssignale dieser Auswerteeinrichtung (34, 35, 39) über einen Rückkanal (2b) dem Lasersender (1) zugeführt sind.

2. Schaltungsanordnung nach Anspruch 1,
dadurch gekennzeichnet,
daß die Auswerteeinrichtung mindestens einen Komparator (34) aufweist, welchem das Ausgangssignal des Leistungsmessers (33) zugeführt ist.

3. Schaltungsanordnung nach Anspruch 1 oder 2,
dadurch gekennzeichnet,
daß die optischen Signale mit einem fehlergesicherten Übertragungscode codiert sind und die Auswerteeinrichtung eine Bitfehlerüberwachungseinrichtung (35) aufweist, welche ein Bitfehler-Auswertesignal (E1) liefert.

4. Schaltunganordnung nach einem der Ansprüche 1 bis 3,
dadurch gekennzeichnet,
daß die Auswerteeinrichtung eine Taktrückgewinnungseinrichtung (36) aufweist, welche ein Taktausfallsignal (E2) liefert.

5. Schaltungsanordnung nach einem der Ansprüche 3 oder 4,
dadurch gekennzeichnet,
daß mehrere Auswertesignale (C1, C2, E1, E2) in der Auswerteeinrichtung (34, 35, 36, 37) miteinander logisch verknüpft sind.

6. Schaltungsanordnung nach einem der Ansprüche 1, 2, 3, 4 oder 5,
dadurch gekennzeichnet,
daß eine Rückstelleinrichtung (38) mit dem Lasersender verbunden ist, welche in zeitlichen Abständen Rückstellsignale zur Herabsetzung der Sendeleistung des Lasersenders abgibt.

7. Schaltungsanordnung nach einem der Ansprüche 1, 2, 3, 4, 5 oder 6,
dadurch gekennzeichnet,
daß die optischen Signale fehlergesichert durch einen im Sender (1) angeordneten Coder (11) in einen Übertragungscode umgesetzt werden und daß die Signale (X1, X2) der Auswerteeinrichtung (34, 35, 39) diesem Coder (11) zugeführt sind und mittels Codefehlereinblendung dem zu übertragenden Signal eingeblendet werden und im Empfänger (3) in einem Decoder (32) zurückgewonnen werden und dem Lasersender (1) zugeführt sind.

FIG.1

1-Ⅱ-PHD88-041

FIG.2